# EUROPÄISCHE PATENTSCHRIFT

(11) **EP 3 237 254 B1**
(45) Veröffentlichungstag und Bekanntmachung des Hinweises auf die Patenterteilung: **20.02.2019**
(21) Anmeldenummer: 15801819.2
(22) Anmeldetag: 27.11.2015
(51) Int. Cl.: B60R 3/02

(54) **SCHIEBETRITT MIT HUB- UND RAMPENFUNKTION**
RETRACTABLE STEP HAVING A LIFTING AND RAMP FUNCTION
MARCHEPIED AVEC FONCTION DE LEVAGE ET DE RAMPE

(30) Priorität: 28.11.2014 DE 202014105766 U
(43) Veröffentlichungstag der Anmeldung: 01.11.2017
(73) Patentinhaber: Gebr. Bode GmbH & Co. KG, 34123 Kassel (DE)
(72) Erfinder: RASEKHI, Abbas, 34128 Kassel (DE)
(74) Vertreter: Patentanwälte Bauer Vorberg Kayser
(86) Internationale Anmeldenummer: PCT/EP2015/077945
(87) Internationale Veröffentlichungsnummer: WO 2016/083586

(56) Entgegenhaltungen:
- DE-A1- 4 422 598
- DE-U1-202010 000 524

## Beschreibung

Die Erfindung betrifft ein Zustiegssystem für ein Fahrzeug des Personenverkehrs mit einem Schiebetritt mit Hub- und Rampenfunktion.

Schiebetritte werden in Zustiegssystemen für Fahrzeuge des Personenverkehrs verwendet, um Personen das Ein- und Aussteigen zu erleichtern. Solche Schiebetritte werden auch als Ausschübe oder Trittplatten bezeichnet. Zustiegssysteme weisen einen ausfahrbaren Schiebetritt mit einer belastbaren und begehbaren Trittfläche auf. Dabei kann der Schiebetritt in einem Rahmen als Aufnahmevorrichtung für den Tritt angeordnet sein, welcher fest mit dem Fahrzeug verbunden ist. Beispielsweise kann dabei der Schiebetritt in den Rahmen eingeschoben und zum Ausschub des Schiebetritts am Rahmen befestigt werden. DE4422598A1 offenbart ein Zustiegssystem gemäß den Oberbegriffen der unabhängigen Ansprüche 1 und 7.

Grundsätzlich gibt es viele Ansätze, solche Zustiegssysteme mit Schiebetritten für den Einstieg in Fahrzeuge des Personenverkehrs zu konzipieren. Problematisch ist jedoch, dass aufgrund von unterschiedlichen Einstiegsplattformen, wie beispielsweise Bahn- oder Bussteigen, Toleranzen bezüglich einer Distanz zum Fahrzeug gegeben sind. Bekannte Zustiegssysteme können einen barrierefreien Einstieg in ein Fahrzeug gewährleisten, wenn ein Schiebetritt einen Abstand zwischen dem Fahrzeug und einer Einstiegsplattform dadurch ausgleicht, dass der Schiebetritt zum Einstieg von Personen ausgefahren wird. Es ist jedoch problematisch, dass Einstiegsplattformen sowohl in Bezug auf den Abstand zum Fahrzeugeinstieg als auch in Bezug auf die Höhe zum Fahrzeugeinstieg unterschiedlich ausgestaltet sind. Deshalb ist es auch nötig, dass die Höhe der Einstiegsplattform in Bezug auf den Einstieg zum Fahrzeug durch eine Einstiegshilfe ausgeglichen wird. Insbesondere besteht dieser Bedarf für barrierefreie Einstiege des Personenverkehrs.

Aufgabe ist es daher, ein Zustiegssystem zur Verfügung zu stellen, das eine Distanz zwischen einer Einstiegsplattform und einem Fahrzeugeinstieg in verbesserter Weise überbrückt. Des Weiteren ist es Aufgabe der Erfindung, dass der Zugang zu einem Fahrzeug barrierefrei gewährleistet werden kann.

Diese Aufgabe wird mit einem Zustiegssystem mit den Merkmalen der Ansprüche 1 und 7 gelöst.

Vorteilhafte weitere Ausgestaltungen sind jeweils in den Unteransprüchen angegeben. Dabei können alle Kombinationen, wie auch nur einzelne Kombinationen der Merkmale des Zustiegssystems zusammen genutzt werden. Weiterhin ist es jeweils auch vorgesehen und möglich, einzelne oder mehrere Merkmale des Zustiegssystems beliebig zu kombinieren.

Erfindungsgemäß wird ein Zustiegssystem für ein Fahrzeug des Personenverkehrs mit einem Schiebetritt mit Hub- und Rampenfunktion vorgeschlagen, wobei sowohl eine ausfahrbare Vorderkante des Schiebetritts als auch eine in Fahrtrichtung hinten angeordnete Rückkante des Schiebetritts in der Höhe veränderbar sind.

Der Schiebetritt, beziehungsweise die Trittplatte oder der Ausschub, ist dabei horizontal in ein Fahrzeug ein- und ausfahrbar.

Als eine Vorderkante des Schiebetrittes ist dabei diejenige Kante zu verstehen, welche bei einem Ausfahren des Schiebetritts aus dem Fahrzeug in Fahrtrichtung vorne, also vom Fahrzeug abgewandt, gelegen ist. Als Rückkante des Schiebetritts ist dabei diejenige Kante des Schiebetritts zu verstehen, welche beim Ausfahren des Schiebetritts in Fahrtrichtung hinten gelegen ist.

In einer weiteren Ausgestaltungsform des Zustiegssystems weist der Schiebetritt einen Ausfahrantrieb zum Ein- und Ausfahren des Schiebetritts mit einem Ausfahrmotor und einem Hubgetriebe auf. Das Hubgetriebe ist dabei eingerichtet, um eine Ausfahrbewegung des Ausfahrmotors in eine zumindest teilweise Schwenkbewegung des Schiebetritts zu übersetzen, so dass die Schwenkbewegung des Schiebetritts eine Höhenveränderung der Vorderkante und/oder der Rückkante bewirkt.

Als Ausfahrbewegung des Ausfahrmotors ist in diesem Zusammenhang eine allgemeine Verfahrbewegung des Ausfahrmotors zu verstehen. Der beschriebene Antrieb und die Übersetzung für die Schwenkbewegung des Schiebetritts sind dazu vorgesehen, um sowohl bei einem Ausfahren als auch bei einem Einfahren des Schiebetritts Anwendung zu finden.

Vorzugsweise bewegt sich der Schiebetritt beim Ausfahren von einer Ruheposition in eine Einstiegsposition und beim Einfahren von der Einstiegsposition in die Ruheposition zurück.

Als "Schwenkbewegung" in diesem Zusammenhang ist eine Bewegung zu verstehen, welche zumindest teilweise rotatorischen Anteil aufweist. Als "schwenkbar" oder "schwenken" in diesem Zusammenhang ist im Wesentlichen eine Drehbewegung um eine in die Zeichnungsebene hineinragende Achse zu verstehen - vorzugsweise senkrecht zur Ausfahrrichtung des Schiebetritts.

In einer weiteren Ausgestaltungsform weist der Schiebetritt eine Ausfahreinheit auf, mit der der Schiebetritt über das Hubgetriebe beweglich gekoppelt ist. Die Ausfahrbewegung des Ausfahrmotors ist dabei zumindest teilweise translatorisch.

Weiterhin kann das Hubgetriebe einen Hebel aufweisen, welcher von dem Ausfahrantrieb zum Übersetzen der Ausfahrbewegung des Ausfahrmotors in die Schwenkbewegung des Schiebetritts bewegt wird. Vorzugsweise wird der Hebel geschwenkt.

In einer weiteren Ausgestaltungsform des Schiebetrittes wird die Ausfahreinheit in einer Schiene geführt. Weiterhin kann die Ausfahreinheit zur Führung in der Schiene Gleitelemente, wie beispielsweise Rollen, aufweisen. Weiterhin kann die Ausfahreinheit in einem Rahmen angeordnet sein oder an einer oder zwei parallel zur Ausfahrrichtung des Schiebetritts liegenden Seiten des Rahmens angeordnet werden. Hierzu ist es beispielsweise auch denkbar, dass zwei parallel geführte Ausfahreinheiten vorgesehen werden.

Weiterhin kann ein Schiebetritt-Antrieb vorgesehen werden, welcher zusätzlich zu einer Hub- und Rampenfunktion nur den Schiebetritt aus dem Fahrzeug hinaus- und wieder einfährt.

Hierzu können beispielsweise Antriebselemente, insbesondere Riemenelemente vorgesehen sein, welche die Ausfahreinheit in ihrer Ein- und Ausfahrbewegung antreibt.

Ein solcher Schiebetritt-Antrieb kann in einem Rahmen angeordnet sein. Des Weiteren ist es jedoch möglich, dass ein Schiebetritt-Antrieb außerhalb eines Rahmens angeordnet wird.

In einer weiteren Ausgestaltungsform kann ein Ausfahrantrieb des Schiebetritts einen Schiebetritt-Antrieb aufweisen.

Ein Rahmen kann dabei ein als einzelnes Bauteil ausgestaltet sein, so dass ein ganzes Zustiegssystem einzeln gefertigt werden kann. Dies ist zu einer einfachen Montage in einem Fahrzeug vorteilhaft.

Weiterhin ist es auch möglich, dass ein Rahmen integral in einem Fahrzeug ausgebildet ist oder ein Fahrzeug eine Montagevorrichtung in Rahmenform für einen Schiebetritt bietet.

In einer weiteren bevorzugten Ausgestaltungsform kann die Ausfahreinheit an zur Ausfahrrichtung parallel liegenden Seiten des Rahmens ein- oder mehrere Seitenelemente aufweisen. Es können zusätzliche Schienen oder Führungen bereitgestellt werden, in denen Gleitelemente laufen. Gleichzeitig kann dadurch gewährleistet werden, dass die Ausfahreinheit aus der Rahmeneinheit nicht verrutscht oder entgleitet. Weiterhin können Führungen zugleich als Befestigungsvorrichtung des Rahmens am Fahrzeug verwendet werden. So kann beispielsweise Montageplatz für ein Zustiegssystem an einem Fahrzeug und/oder Montageplatz für einen Schiebetritt in einen Zustiegssystem verringert werden.

In einer ersten Variante einer Ausgestaltungsform ist das Hubgetriebe als eine Doppelschwinge ausgestaltet. Das Hubgetriebe als Doppelschwinge weist dabei ein erstes und ein zweites Liftelement auf, welche beide im Wesentlichen als längliche Bauteile ausgestaltet sind und eine längliche Form aufweisen. Das erste und das zweite Liftelement ist jeweils an entgegengesetzten Enden mit der Ausfahreinheit und mit dem Schiebetritt gelenkig verbunden. Dabei sind die beiden Liftelemente voneinander beabstandet angeordnet. Das erste Liftelement ist in einem Bereich des Schiebetritts zwischen der Vorderkante und der Rückkante mit einem ersten Gelenk schwenkbar an den Schiebetritt angekoppelt und mit einem zweiten Gelenk schwenkbar an die Ausfahreinheit angekoppelt. Das zweite Liftelement ist in einem Bereich der Rückkante mit einem dritten Gelenk schwenkbar an den Schiebetritt angekoppelt und mit einem vierten Gelenk schwenkbar an die Ausfahreinheit angekoppelt. Das vierte Gelenk weist dabei zusätzlich einen translatorischen Freiheitsgrad auf. Bevorzugterweise ist dieser translatorische Freiheitsgrad in horizontaler Richtung ausgestaltet. Dabei können das vierte Gelenk und/oder das zweite Liftelement mit dem Ausfahrmotor gekoppelt sein, so dass diese durch den Ausfahrmotor hin- und hergefahren werden können.

Bevorzugt ist dabei, dass der horizontale Freiheitsgrad des vierten Gelenks durch eine horizontale Nut in der Ausfahreinheit zur Führung des vierten Gelenks gebildet wird. Die Führung des vierten Gelenks in der Nut erfolgt dabei bei Antrieb des Gelenks durch den Ausfahrmotor, welcher das Gelenk in der Nut hin- und her bewegt. Dadurch, dass der zweite Lifter an dem Schiebetritt schwenkbar, aber nicht horizontal beweglich angekoppelt ist, erfährt der zweite Lifter durch eine translatorische Bewegung des vierten Gelenks in der Nut zwangsweise eine Schwenkbewegung. Die die Rückkante des Schiebetritts wird bei Bewegung des vierten Gelenks in eine Hubbewegung gezwungen, weil der zweite Lifter den Schiebetritt nach oben drückt oder nach unten zieht.

In einer weiteren bevorzugten Ausführungsform der ersten Variante weist das zweite Gelenk einen translatorischen Freiheitsgrad in vertikaler Richtung auf. Bevorzugt ist dabei, dass der translatorische Freiheitsgrad des zweiten Gelenkes durch eine vertikale Nut in der Ausführeinheit zum Führen des zweiten Gelenks gebildet wird.

In einer weiteren Ausgestaltungsform der ersten Variante ist das zweite Gelenk und/oder der erste Lifter mit dem Ausfahrmotor gekoppelt, sodass diese bewegt werden können.

In einer weiteren Ausgestaltungsform ist es auch möglich, dass das zweite und das vierte Gelenk einen kombinierten translatorischen Freiheitsgrad in horizontaler und vertikaler Richtung aufweisen. Dabei ist beispielsweise möglich, dass diese Gelenke zusätzlich zur schwenkbaren Ankoppelung in dem zweiten und vierten Gelenk beispielsweise auf einer Kreisbahn geführt werden. Hierzu ist auch möglich, dass diese Gelenke an der Ausfahreinheit in einer kreisförmigen oder kurvenförmigen Nut geführt werden.

Weiterhin ist auch möglich, dass das zweite und das vierte Gelenk beispielsweise in einer teilweise vertikal und teilweise horizontal verlaufenden Nut geführt werden. Auf diese Weise kann beispielsweise erreicht werden, dass der Ausfahrmotor durch das Antreiben des vierten Gelenks den Schiebetritt bis zu einem gewissen Punkt rein translatorisch bewegt, und dann, sobald das vierte Gelenk in seiner Bewegungsrichtung anders geführt wird, eine Schwenkbewegung des Schiebetritts ausführt wird.

Für die zumindest teilweise schwenkende Bewegung des Schiebetritts können prinzipiell beide Liftelemente bewegt werden. Es ist möglich das erste und/oder zweite Liftelement durch den Ausfahrmotor anzutreiben.

Außerdem können die Liftelemente im zweiten und/oder vierten Gelenk translatorisch über den Ausfahrmotor bewegt werden.

In einer zweiten Variante einer Ausgestaltungsform wird der Schiebetritt um einen Schwenkpunkt gedreht, der fest mit der Ausfahreinheit verbunden ist. Dieser Schwenkpunkt liegt dabei im Wesentlichen zwischen der Vorderkante und der Rückkante des Schiebetritts und die Drehachse des Schiebetritts um diesen Schwenkpunkt liegt senkrecht zur Ausfahrrichtung des Schiebetritts.

In einer weiteren Ausgestaltungsform der zweiten Variante weist das Hubgetriebe eine schwenkbare Ankopplung der Ausfahreinheit und des Schiebetritts im Bereich zwischen der Vorderkante und der Rückkante auf. Weiterhin weist das Hubgetriebe ein Koppelgetriebe auf, welches die Ausfahreinheit und den Schiebetritt im Bereich der Rückkante beweglich verbindet. Das Koppelgetriebe des Hubgetriebes greift an einem von dem Schwenkpunkt beabstandeten Punkt bzw. Achse des Schiebetritts an und führt eine Hubbewegung der Rückkante des Schiebetritts aus. Dadurch wird die Rückkante des Schiebetritts bewegt. Durch die schwenkbare Ankopplung des Schiebetritts im Bereich des Schwenkpunktes bewegt sich zwangsläufig die entgegengesetzte vordere Kante des Schiebetritts. Die entgegengesetzten Kanten des Schiebetritts, die Vorderkante und Rückkante, führen somit entgegengesetzte Hubbewegung aus.

Das Koppelgetriebe ist dabei eingerichtet, um eine translatorische Bewegung der Ausfahreinheit in eine Hubbewegung eines Anbindungspunktes des Koppelgetriebes mit dem Schiebetritt umzusetzen. Ein solcher Anbindungspunkt des Koppelgetriebes mit dem Schiebetritt ist vorzugsweise im Bereich der Rückkante des Schiebetritts angeordnet.

Dabei ist vorzugsweise vorgesehen, dass der Ausfahrmotor die Ausfahreinheit translatorisch bis zu einem Punkt antreibt, an dem die translatorische Bewegung der Ausfahreinheit stoppt und durch das Koppelgetriebe in die Hubbewegung des Schiebetritts umgesetzt wird. Hierbei kann beispielsweise vorgesehen sein, dass die Ausfahreinheit bei ihrer translatorischen Bewegung, angetrieben durch den Ausfahrmotor, an einem Anschlag anstößt, wodurch dann die translatorische Antriebskraft des Ausfahrmotors auf das Koppelgetriebe übersetzt wird.

In einer weiteren Ausgestaltungsform kann beispielsweise vorgesehen sein, dass der Schiebetritt-Antrieb und der Ausfahrantrieb zumindest den gleichen Motor aufweisen. Beispielsweise kann der Ausfahrmotor des Ausfahrantriebs auch den Schiebetritt-Antrieb antreiben.

In einer weiteren Ausgestaltungsform kann vorgesehen sein, dass der Ausfahrantrieb eine elektronische Steuerung aufweist. Eine elektronische Steuerung kann zudem eine Schnittstelle zu anderen Steuerungssystemen eines Fahrzeugs des Personenverkehrs aufweisen.

Eine weitere Ausgestaltungsform kann einen Sicherheitsschalter aufweisen. Ein Sicherheitsschalter kann dazu genutzt werden, in einer Notsituation die Stromzufuhr für einen Antrieb des Schiebetritts zu unterbrechen, so dass beispielsweise ein Ausfahren nicht mehr möglich ist. Hierzu kann vorgesehen sein, dass der Sicherheitsschalter mit einem Aktuator versehen ist, um eine Notsituation zu erfassen. Als Notsituation kann z.B. ein Unfall, ein Verklemmen oder ein Anstoßen des Schiebetritts zu verstehen sein.

In einer weiteren Ausgestaltungsform kann vorgesehen sein, dass der Schiebetritt eine Blockade für die Hub- und Rampenfunktion aufweist.

Eine solche Blockade für eine Hub- und Rampenfunktion des Schiebetritts kann beispielsweise erst freigeschaltet werden, wenn eine Rückkante des Schiebetritts über eine Fahrzeugaußenhaut hinweg bewegt wird, so dass eine Hubfunktion nur außerhalb des Fahrzeugs ausgeführt wird.

In einer weiteren Ausgestaltungsform kann beispielsweise vorgesehen sein, dass der Ausfahrmotor die Ausfahreinheit bis zu einem Punkt antreibt, an dem die translatorische Bewegung der Ausfahreinheit gestoppt wird. Beispielsweise kann vorgesehen sein, dass die Ausfahreinheit durch einen Anschlag gestoppt wird, wodurch wiederum ein Kipphebel bewegt wird.

Durch eine Kippbewegung des Kipphebels kann beispielsweise erreicht werden, dass eine Verriegelung des Schiebetritts gelöst wird.

Hierzu kann beispielsweise vorgesehen sein, dass durch ein Kippen des Kipphebels ein Bolzen an dem Schiebetritt freigegeben werden, der in einer nicht gekippten Position des Kipphebels eine Schiebetrittbewegung blockiert.

In einer weiteren Ausgestaltungsform kann hierzu vorgesehen sein, dass ein Kipphebel durch eine Feder gehalten wird, die sich in einer gekippten Position des Kipphebels spannt.

Beispielsweise kann die Feder so ausgelegt und ausgestaltet sein, dass sie den Kipphebel in seine Ausgangslage - nicht gekippt - zurück bewegt.

Eine Verriegelungsfunktion kann beispielsweise dadurch erreicht werden, dass der Bolzen in einer gekrümmt verlaufenden Nut am Kipphebel geführt wird.

Eine solche Nut kann beispielsweise derart ausgestaltet sein, dass diese in einer ungekippten Position des Kipphebels eine Bewegung des Bolzens in der Nut verhindert.

Weiterhin kann die Nut so beschaffen sein, dass durch ein Kippen des Kipphebels die Nut und der Bolzen relativ zueinander derart bewegt werden, dass der Bolzen sich in gekippter Position des Kipphebels weiter bewegen kann.

Besonders bevorzugt ist, dass der Bolzen an dem Schiebetritt so befestigt ist, dass sich der Schiebetritt nicht schwenken lässt, solange der Kipphebel in einer nicht gekippten Position gelegen ist und sich der Schiebetritt nur bewegen kann, wenn sich der Kipphebel aus dieser Position heraus in eine gekippte Position hinein bewegt.

Weiterhin ist bevorzugt, dass der Bolzen in der Nut geführt wird und sich bei einer Entriegelung des Schiebetritts Bolzen und Nut relativ zueinander bewegen.

Dadurch kann beispielsweise erreicht werden, dass der Schiebetritt in seiner Bewegung blockiert ist, solange der Kipphebel nicht gekippt ist. Weiterhin kann damit erreicht werden, dass der Schiebetritt zu einer Schwenkbewegung freigegeben wird, wenn der Kipphebel in eine gekippte Position bewegt wird.

In einer weiteren bevorzugten Ausgestaltungsform kann ein solcher Mechanismus in das Hubgetriebe integriert werden.

Dabei ist besonders bevorzugt, dass ein Bauteil des Hubgetriebes als Kipphebel fungiert, welcher einen an dem Schiebetritt anschließenden Bolzen in seiner Bewegung blockiert und freigeben kann.

Beispielsweise kann vorgesehen sein, dass eine Nut zur Führung eines an dem Schiebetritt befestigten Bolzen beispielsweise in einen ersten und/oder zweiten Lifter integriert ist.

Außerdem kann beispielsweise vorgesehen sein, dass ein Bolzen, der an dem Schiebetritt befestigt ist, in einer Nut, welche an einem ersten Element des Koppelgetriebes vorgesehen ist, geführt wird. Beispielsweise ist besonders bevorzugt, dass eine solche Führungsnut gekrümmt ausgebildet ist.

Es kann weiter vorgesehen sein, dass ein Antrieb des Schiebetritts mit einer Bremse ausgestattet ist, der den gesamten Schiebetritt im Falle einer fehlenden Stromversorgung am Ausfahren hindert.

Weiterhin kann vorgesehen sein, dass die Ausfahreinheit Versteifungselemente aufweist, die die Ausfahreinheit zum einen versteifen, aber auch einen besseren Gleichlauf gewährleisten, wenn wenigstens zwei, oder aber auch mehrere, parallel zueinander angeordnete Ausfahreinheiten an einem Schiebetritt vorgesehen sind.

In einer weiteren Ausgestaltungsform kann vorgesehen sein, dass der Schiebetritt eine Feststellvorrichtung aufweist. Vorzugsweise kann eine solche Feststellvorrichtung manuell betätigt werden. Mit der Feststellvorrichtung kann der Schiebetritts beispielsweise in verschiedenen Positionen und Neigungen festgestellt werden, beispielsweise für Wartungs- oder Reinigungsarbeiten. Dabei kann vorgesehen sein, dass diese Feststellvorrichtung nur bei Bedarf betätigt wird und ansonsten so verstaut werden kann, dass sie nicht stört.

Weiterhin kann vorgesehen sein, dass am Schiebetritt eine Dichtung vorgesehen ist. Eine Dichtung kann beispielsweise an einer Vorderkante vorgesehen sein. Bevorzugt ist eine Dichtung in Form einer Gummilippe ausgestaltet, um den Innenraum des Fahrzeugs vor dem Eintritt von Feuchtigkeit und/oder Schmutz zu schützen, wenn der Schiebetritt eingefahren ist.

Weitere vorteilhafte Ausgestaltungen und Weiterbildungen sind in den nachfolgenden Figuren angegeben. Die daraus hervorgehenden jeweiligen Merkmale sind jedoch nicht auf einzelne Figuren oder Ausgestaltungen beschränkt. Vielmehr können ein oder mehrere Merkmale der obigen Beschreibung mit einzelnen oder mehreren Merkmalen der Figuren zusätzlich zu Weiterbildungen kombiniert werden.

Es zeigen:
- Figuren 1 bis 7: einen Schiebetritt der ersten Variante,
- Figuren 8 bis 10: eine weitere Variante eines Schiebetritts,
- Figuren 11 bis 14: einen Schiebetritt der zweiten Variante,
- Figuren 15 und 16: eine weitere Ausgestaltung eines Schiebetritts mit einer Feststellbremse und
- Figur 17: einen Schiebetritt mit einem Entriegelungsmechanismus

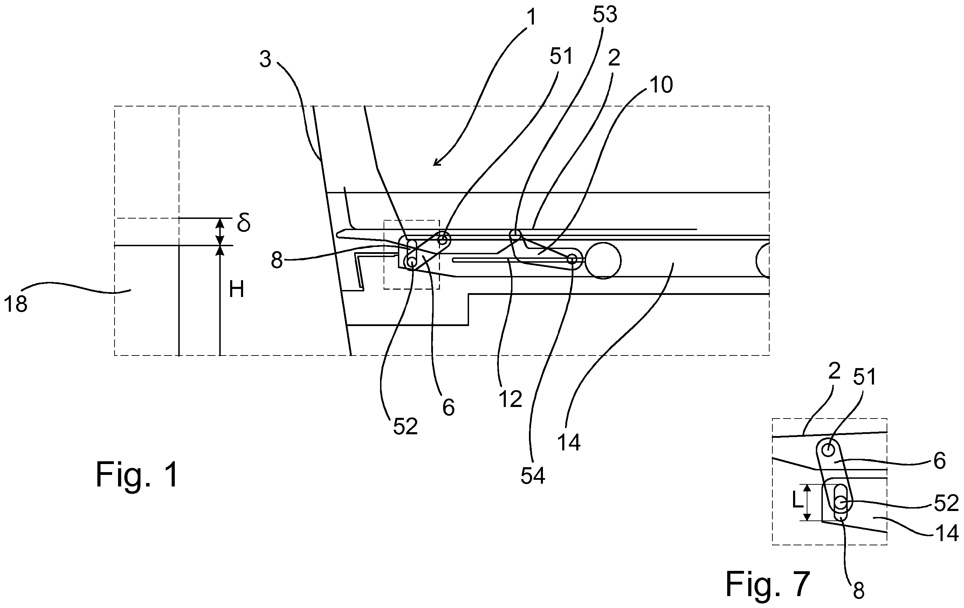

Aus Figur 1 geht ein Zustiegssystem 1 hervor, welches einen Schiebetritt 2 aufweist, der in einem Fahrzeug 3 geführt wird und ein- und ausgeschoben werden kann. Das Zustiegssystem 1 umfasst eine Ausfahreinheit 14, welche in Seitenträgern ein- und ausfahrbar gelagert ist. Vorzugsweise ist die Ausfahreinheit 14 in zwei parallelen Seitenträgern geführt, und bietet so eine gute Stabilität zum Ein- und Ausfahren des Schiebetritts 2. Der Schiebetritt 2 ist an der Ausfahreinheit 14 mit einem ersten Liftelement 6 gelagert, welches im Folgenden auch als Hubschwenkarm bezeichnet wird. Der Hubschwenkarm 6 ist sowohl an der Ausfahreinheit 14 als auch an dem Schiebetritt 2 mit einem ersten und einem zweiten Drehgelenk 51,52 gelagert. Zusätzlich weist das zweite Gelenk 52 an der Ausfahreinheit 14 auch einen translatorischen Freiheitsgrad in vertikaler Richtung auf. Dazu ist das zweite Gelenk 52 im Rampenhubschlitz 8 gelagert, welcher als Nut ausgebildet ist.

Des Weiteren ist der Schiebetritt 2 des Schiebetritts 1 mit der Ausfahreinheit 14 über ein zweites Liftelement 10 verbunden, welches im Folgenden als Lenk- und Endanhebungswinkel bezeichnet wird. Das zweite Liftelement 10 ist zum einen schwenkbar an der Rückkante des Schiebetritts 2 im dritten Gelenk 53 angebunden zum anderen ist das zweite Liftelement 10 schwenkbar im vierten Gelenk 54 und in einer horizontalen Nut 12 mit der Ausfahreinheit 14 verbunden.

Durch diese Anordnung ergibt sich, dass der Schiebetritt 2 mit der Ausfahreinheit 14 über das erste und zweite Liftelement 6, 10 mit der Ausfahreinheit 14 so verbunden ist, dass die beiden Liftelemente 6, 10 in den Gelenken 52,54 in den Nuten 8,12 geführt werden.

Durch eine translatorische Bewegung des zweiten Liftelements 10 im vierten Gelenk 54 können so die Vorderkante und die Rückkante des Schiebetritts 2 Hubbewegungen ausführen. Des Weiteren ist es dabei möglich, den Schiebetritt als Rampe aufzustellen.

Durch eine translatorische Bewegung des Liftelements 10 im vierten Gelenk 54 in Nut 12 wird das Liftelement 10 gedreht und aufgestellt, wodurch es den Schiebetritt 2 am Anbindungspunkt im dritten Gelenk hochdrückt oder herunterzieht. Dabei wirkt das Liftelement 10 als Hebel.

Eine Schiebetrittführung ist dabei so angeordnet, dass das erste und zweite Liftelement 6, 10 schwenkbar an den Schiebetritt angekoppelt sind und dass das erste Liftelement 6 drehbar und zusätzlich translatorisch in vertikaler Richtung beweglich an der Ausfahreinheit angebunden ist. Das zweite Liftelement 10 ist drehbar und translatorisch in horizontaler Richtung beweglich an die Ausfahreinheit 14 angekoppelt.

Des Weiteren ist in Figur 1 ein Bahnsteig 18 schematisch dargestellt, der eine Bahnsteighöhe H aufweist. In der Praxis ist es erforderlich, dass der Schiebetritt 2 den Spalt zwischen dem Bahnsteig 18 und dem Fahrzeug 3 überbrückt. Eine Bahnsteighöhe variiert dabei in der Praxis um verschiedene Werte. Schematisch ist hier ein Variationswert für eine Bahnsteighöhe mit dem Wert δ angegeben.

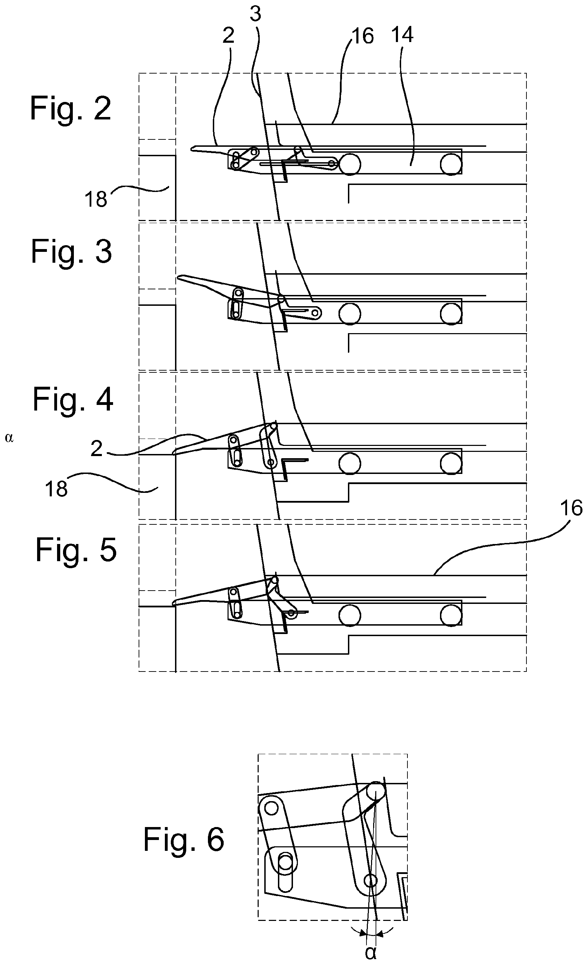

Für eine Schiebetrittfunktion kann die Ausfahreinheit 14 wie in Figur 2 dargestellt, translatorisch in horizontaler Richtung bewegt werden, so dass der Schiebetritt 2 aus dem Fahrzeug herausgefahren wird.

Aus den Figuren 2 bis 5 geht dabei eine mögliche Art eines Verfahrweges für einen Schiebetritt 2 hervor, bei der dieser zunächst, wie in Figur 1 dargestellt, in einer eingefahrenen Ruheposition gelagert ist und dann aus dieser eingefahrenen Position aus dem Fahrzeug 3 heraus in eine ausgefahrene Position wie in der Figur 2 dargestellt ausgefahren wird. Das Ausfahren stellt dabei eine reine translatorische Bewegung des Schiebetritts 2 dar. In Figur 2 ist damit eine Ausgangslage dargestellt, von welcher aus der Schiebetritt 2 als eine Rampe benutzt werden kann. Eine Hubphase ist in Figur 3 dargestellt, wobei durch ein Aufrichten des ersten Liftelements 6 die Vorderkante des Schiebetritts angehoben wird. Hierzu wird das erste Liftelement 6 von einem Ausfahrmotor bewegt, wobei der Ausfahrmotor nicht dargestellt ist.

Das zweite Liftelement 10 kann zusätzlich oder getrennt vom der Bewegung des ersten Liftelements im vierten Gelenk 54 von einem Ausfahrmotor (nicht dargestellt) translatorisch bewegt werden. Die Anordnung des ersten und zweiten Liftelements 6,10 an dem Schiebetritt 2 und der Ausfahreinheit 14 fungiert als ein Hubgetriebe zur Übersetzung der translatorischen Bewegung des vierten und/oder des zweiten Gelenks 52, 54 in eine zumindest teilweise rotatorischen Bewegung des Schiebetritts, sodass die Rück- und/oder Vorderkante des Schiebetritts eine Hubbewegung ausführen.

Weiter ist in Figur 4 dargestellt, wie die Vorderkante des Schiebetritts 2 auf einem Bahnsteig 18 zum Aufliegen gebracht werden kann. Dabei wird zunächst die vordere Kante des Schiebetritts 2 auf dem Bahnsteig 18 geliftet und zum Aufliegen gebracht. Dabei passt sich das erste Liftelement 6 der Position des Schiebetritts 2 an. Das zweite Liftelement 10, Endanhebungswinkel, wird dabei in eine Position geführt, in der das hintere Ende des Schiebetritts angehoben und stabilisiert wird.

Wie in Figur 5 ersichtlich wird dabei die Rückkante des Schiebetritts auf das gleiche Niveau mit dem Fahrzeugboden 16 angehoben.

Das zweite Liftelement 10 wird dadurch stabilisiert, dass dieses in seiner Lage über einen Totpunktwinkel α bewegt wird. Der Totpunkt α ist dabei in der Figur 6 dargestellt.

In Figur 7 ist das erste Liftelement 6, der Schiebetritt 2, und die Ausfahreinheit 14 in einer Vergrößerung dargestellt. Aus dieser Vergrößerung geht hervor, dass der Hubschwenkarm 6 schwenkbar am Schiebetritt 2 über das zweite Gelenk 52 angeschlossen ist und des Weiteren vertikal verschiebbar an der Ausfahreinheit 14 in Nut 8 angekoppelt ist. Dabei ist die translatorische Bewegung des Rampenhubschlitzes 8 auf die Länge L begrenzt.

Für die zumindest teilweise schwenkende Bewegung des Schiebetritts können das zweite und/oder vierte Gelenk translatorisch mit dem Ausfahrmotor bewegt bzw. angetrieben werden.

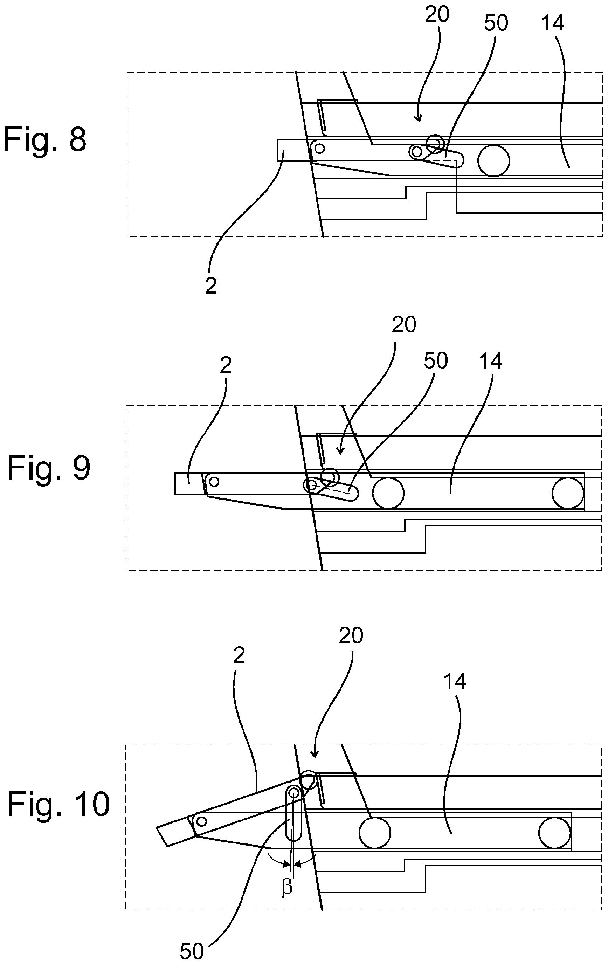

Aus den Figuren 8 bis 10 geht eine weitere Variante eines Zustiegssystems 20 mit einer Hub- und Rampenfunktion hervor. Dabei ist in dieser Variante der Schiebetritt 2 an der Vorderkante schwenkbar mit der Ausfahreinheit 14 verbunden. Des Weiteren ist der Schiebetritt 2 über einen einzelnen Lifter 50 mit der Ausfahreinheit 14 so verbunden, dass dieser einzelne Lifter 50 zum einen an dem Schiebetritt 2 schwenkbar gelagert ist und zum anderen an der Ausfahreinheit 14 sowohl schwenkbar als auch an horizontal translatorisch gelagert ist, so dass der Schiebetritt 2 um die Achse des Drehgelenks an dem Schiebetritt 2 gekippt werden kann. Dabei stellt sich der einzelne Lifter 50 zwischen dem Schiebetritt 2 und Ausfahreinheit 14 auf und verfährt im Bereich des Drehgelenkes an der Ausfahreinheit 14 translatorisch in einer Nut, wobei die Nut in den Figuren 8-10 nicht dargestellt ist, sondern nur die translatorische Bewegung. Vorzugsweise wird der einzelne Lifter 50 durch einen Motor (nicht dargestellt) bewegt.

Aus Figur 8 geht dabei ein Zustiegssystem 20 in einer eingefahrenen Position hervor. Aus der Figur 9 geht ein ausgefahrenes Zustiegssystem 20 hervor, bei dem jedoch noch nicht eine Hubrampenfunktion des Schiebetritts zum Tragen kommt.

Figur 10 stellt dabei ein Zustiegssystem 20 in einer ausgefahrenen Position mit einer Endanhebung und Absenkung der Vorderkante des Schiebetritts 2 dar. Des Weiteren kann der Schiebetritt 2 dadurch arretiert werden, dass der Lifter 50 über einen Totpunkt mit den Arretierungswinkel β hinweg bewegt wird.

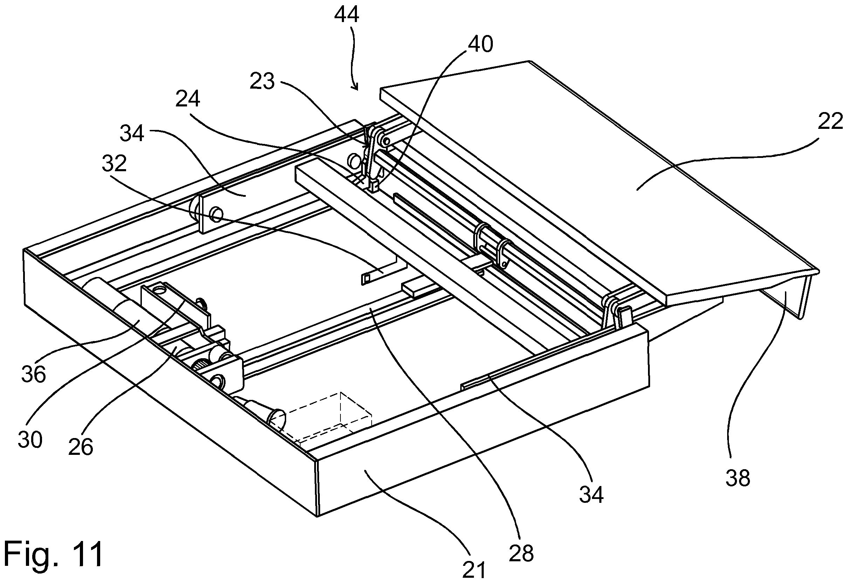

Aus den Figuren 11 bis Figur 14 geht ein Zustiegssystem 44 hervor, bei dem ein Schiebetritt 22 an zwei gegenüberliegenden Ausfahreinheiten 34 angekoppelt ist. Die Ausfahreinheiten 34 sind dabei in einem Rahmen 21 gelagert. Zwischen den Ausfahreinheiten 34 und dem Schiebetritt 22 ist ein Koppelgetriebe 23 angeordnet, welches eingerichtet ist, um die Rückkante des Schiebetritts 22 nach oben oder unten zu bewegen, also eine Hubfunktion der Hinterkante des Schiebetritts 22 auszuführen. Das Koppelgetriebe 23 ist dabei zwischen dem Schiebetritt 22 und der Ausfahreinheit 34 so angeordnet, dass eine Übersetzung einer translatorischen Bewegung stattfindet, die die Ausfahreinheiten antreibt, wenn ein erstes Element des Koppelgetriebes 24 an einen rahmenseitig angeordneten Anschlag 40 anschlägt. Wenn die Ausfahreinheit 34 am Anschlag 40 weiter bewegt wird, wirkt zumindest ein Bauteil des Koppelgetriebes 23 als Hebel. Die Rückkante des Schiebetritts wird über die Übersetzung des Koppelgetriebes 23 angehoben.

Es ist besonders bevorzugt, dass in einem Rahmenelement zwei parallel laufende Ausfahreinheiten angeordnet sind. Optional können diese zur Versteifung miteinander verbunden sein. Weiterhin kann dann vorteilhafterweise vorgesehen sein, dass beide Ausfahreinheiten 34 über Koppelgetriebe 23 parallel und gegenüberliegend an dem Schiebetritt 22 angeordnet sind. Weiterhin kann dabei vorgesehen sein, dass an beiden gegenüberliegenden parallelen Rahmenseiten, in dem die Ausfahreinheiten geführt werden, auch zwei Anschläge vorgesehen sind. Weiterhin können parallel an dem Schiebetritt 22 angeordnete Koppelgetriebe 23 auch eine Versteifung aufweisen. Die Versteifungen können gleiche Bauteile der Koppelgetriebe 23 miteinander verbindet. Versteifungen können auch zwischen parallel geführten Ausfahreinheiten 34 vorgesehen sein.

In dieser Ausführungsform ist vorgesehen, dass ein Elektromotor 26 die Ausfahreinheiten 34 über einen Zahnriemen 28 antreibt. Das in Figur 11 dargestellte Zustiegssystem 44 weist ferner einen Sicherheitsschalter 30 auf, einen Sicherheitsaktuator 32, wobei der Sicherheitsaktuator 32 in einer Gefahrsituation den Sicherheitsschalter 30 auslösen kann. Ferner ist eine elektronische Steuerungsbox 36 vorgesehen, um die Steuerung des Antriebs mit einer Steuerung eines Fahrzeugs, in dem ein Zustiegssystem montiert wird, zu verbinden. Um den Schiebetritt 22 des Zustiegssystems 44 mit einem Fahrzeugportal abzudichten, ist eine Gummidichtung in Form einer Lippe 38 an der Vorderkante des Schiebetritts 22 vorgesehen.

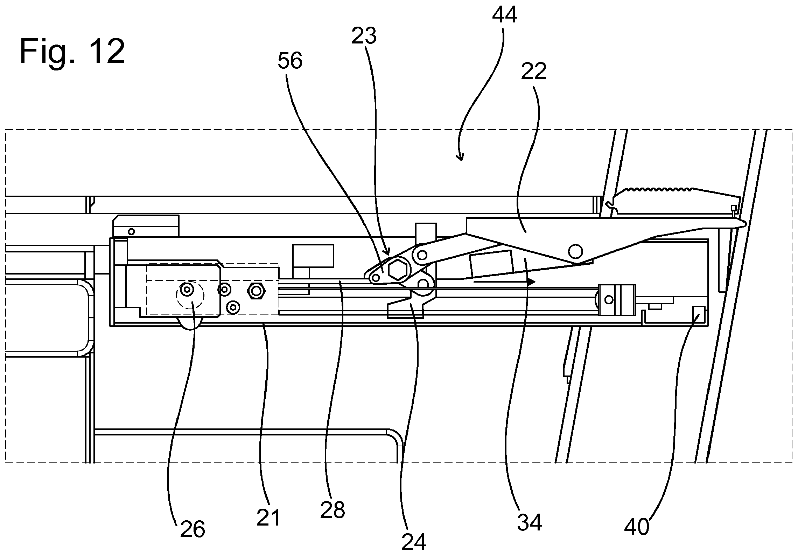

In Figur 12 ist das Zustiegssystem 44 in einer Schnittdarstellung gezeigt. Die Ausfahreinheit 34 ist im Rahmen 21 gleitend gelagert. Ein Motor 26 treibt dabei die Ausfahreinheit 34 über einen Zahnriemen 28 translatorisch in Richtung des Pfeils an. Die Ausfahreinheit 34 und der Schiebetritt 22 sind dabei über das Koppelgetriebe 23 miteinander gekoppelt. Wenn nun die Ausfahreinheit 34 über den Antrieb in Pfeilrichtung geschoben wird, stößt ein erstes Element des Koppelgetriebes 24 an einen Anschlag 40 an. Wenn die Ausfahreinheit 34 weiter bewegt wird, kippt das erste Element des Koppelgetriebes und zusätzlich wirkt eine Ausfahrkraft auf das Bauteil 56 des Koppelgetriebes 23, sodass dieses als ein Hebel bewegt wird und die Ausfahrkraft bzw. die Ausfahrbewegung in das Koppelgetriebe einleitet.

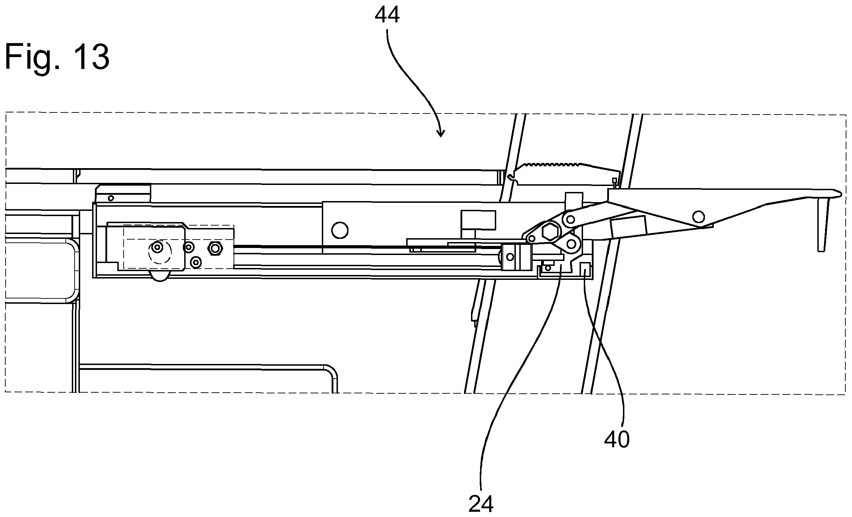

Eine Darstellung einer Bewegungssequenz des Zustiegssystems 44 in einer weiter ausgefahrenen Position als in Figur 12 ist in der Figur 13 dargestellt. In dieser Sequenz befindet sich das erste Element des Koppelgetriebes 24 kurz bevor es in Kontakt mit dem Anschlag 40 gerät.

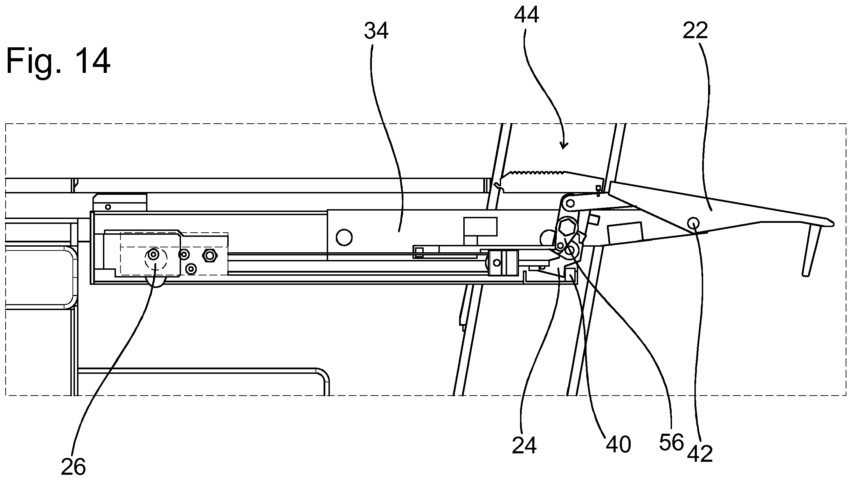

Aus Figur 14 geht eine weitere Bewegungssequenz hervor, bei der das erste Element des Koppelgetriebes 24 mit dem Anschlag 40 in Kontakt gekommen ist und der Motor 26 die Ausfahreinheit 34 weiter bewegt hat. Das Bauteil 56 des Koppelgetriebes 23 ist als Hebel bewegt worden, so dass das Koppelgetriebe 23 die translatorische Bewegung auf das hintere Ende des Schiebetritts 22 als Hubbewegung übersetzt und der Schiebetritt 22 angehoben wird.

Des Weiteren ist in dieser Ausführungsform des Zustiegssystems 44 vorgesehen, dass der Schiebetritt 22 nicht nur über das Koppelgetriebe 23 an der Ausfahreinheit 34 angebunden ist, sondern auch durch ein weiteres Gelenk 42, welches den Schiebetritt 22 mit der Ausfahreinheit 34 schwenkbar verbindet. Dabei ist die der Schiebetritt um eine Achse senkrecht zur Ausfahrbewegung drehbar. Hier als Achse, welche in die Zeichenebene hineinragt, dargestellt. Durch diese Ankopplung des Schiebetritts 22 an der Ausfahreinheit 34 führt der Schiebetritt 22 bei Anhebung der Hinterkante mit der Vorderkante einer Absenkung entsprechend aus. Dadurch führt der Schiebetritt sowohl eine Hub- als auch eine Absenkfunktion 23 aus.

Weiterhin ist es auch denkbar und möglich, ein Koppelgetriebe und/oder einen Anschlag so anzuordnen, dass der Schiebetritt 22 im hinteren Bereich eine Absenkung ausführt und dadurch im vorderen Bereich mit der Vorderkante eine Anhebung erfährt. Der Schiebetritt 22 ist vorzugsweise so eingerichtet, dass sich die Schwenkbewegung beim Einfahren des Schiebetritts 22 entsprechend umkehrt.

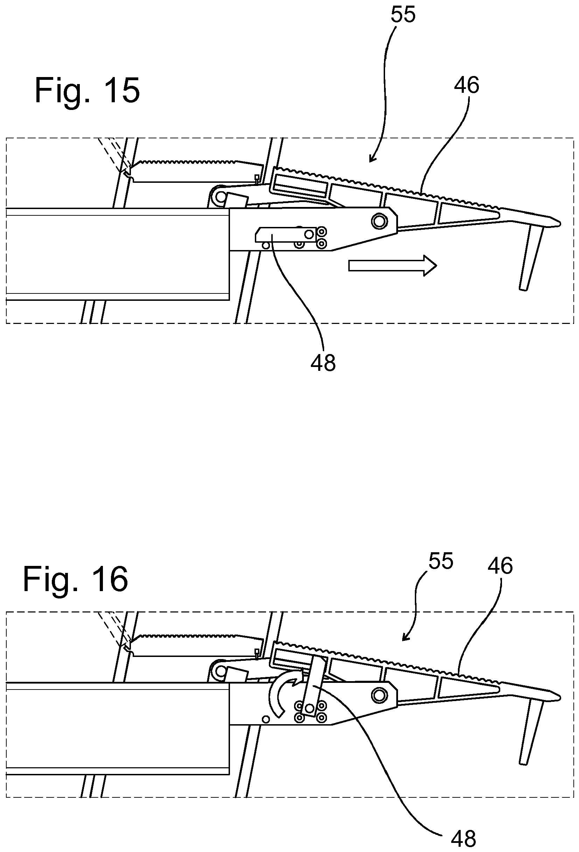

Aus Figuren 15 und 16 geht ein weiteres Zustiegssystem 55 hervor, bei dem eine manuelle Arretierung 48 des Schiebetritts 46 vorgesehen ist. Abgesehen von der Hub- und Absenkfunktion, die durch die Ausfahrbewegung über das Koppelgetriebe auf den Schiebetritts übertragen wird, ist es somit auch möglich, beispielsweise für Wartungs- oder Reparaturarbeiten den Schiebetritt 46 in einer Rampenposition festzustellen. Die manuelle Arretierung 48 ist hier so eingerichtet, dass sie nicht automatisch ausgeführt wird, sondern per Hand. Des Weiteren kann es jedoch auch vorgesehen und möglich sein, dass eine Arretierung automatisch oder beispielsweise elektronisch aktiviert wird.

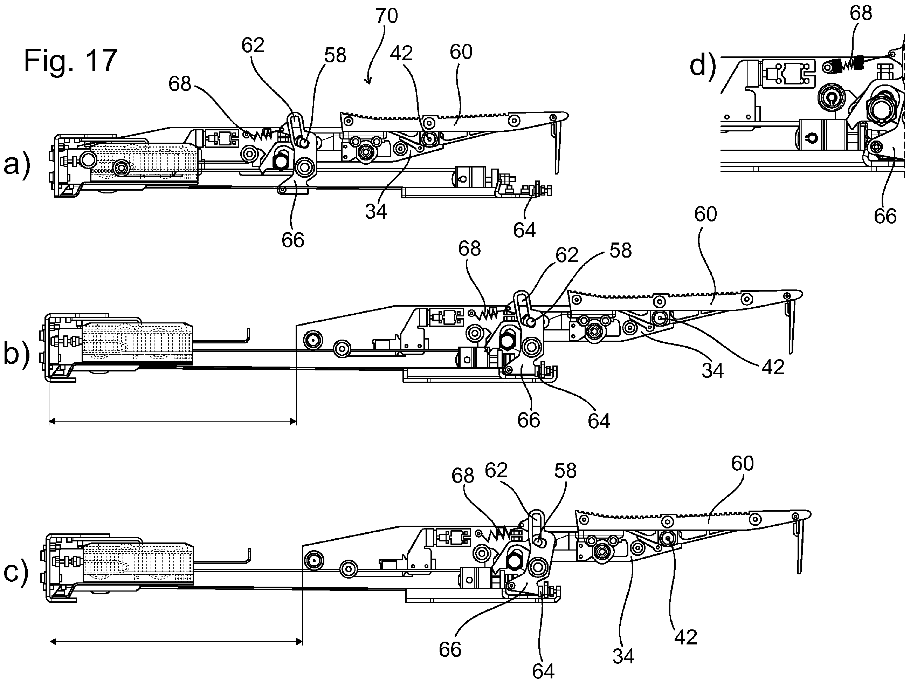

Figur 17 stellt ein Zustiegssystem 70 mit einem Schiebetritt 60 dar. Der Schiebetritt 60 weist eine Hub- und Rampenfunktion auf, wobei dieser ein- und ausgefahren und gekippt werden kann. Das Kippen des Schiebetritts 60 kann dabei ver- und entriegelt werden. Hierzu weist der Schiebetritt 60 einen Bolzen 58 auf, der in einer gekrümmten Nut 62 in einem Kipphebel 66 geführt wird. Bei einem Verfahrweg des Schiebetritts, welcher über die Figuren 17a bis 17c dargestellt ist, stößt der Kipphebel am Ende des Verfahrwegs an einen Anschlag 64 an, wodurch der Kipphebel 66 gekippt wird. Durch die Kippbewegung des Kipphebels 66 wird der Bolzen 58 relativ zur Nut 62 bewegt.

In einer nicht gekippten Position des Kipphebels 66, wie in Figur 17a dargestellt, kann der Bolzen 58 nicht vertikal bewegt werden, um den Schiebetritt 60 um das Gelenk 42 zu drehen. Durch eine Bewegung des Kipphebels relativ zum Bolzen 58, wird die Nut 62 relativ zum Bolzen 58 so bewegt, dass dieser sich in der Nut 62 in horizontaler Richtung bewegen kann und eine horizontale Bewegung der hinteren Kante des Schiebetritts 60 möglich ist. Der Schiebetritt 60 kann so um das Gelenk 42 geschwenkt werden. Durch ein Schwenken des Schiebetritts 60 um das Gelenk 42 kann dieser eine Hub- und Rampenfunktion ausführen, wobei sich die Rückkante und die vordere Kante des Schiebetritts 60 in ihrer Höhe verändern.

Zusätzlich ist am Zustiegssystem 70 eine Feder 68 vorgesehen, welche den Kipphebel 66 und die Ausfahreinheit 34 verbindet. Die Feder ist entspannt, wenn der Kipphebel 66 in einer nicht gekippten Position gelegen ist, wie in den Figuren 17a und 17b. Die Feder ist gespannt, sobald der Kipphebel 66 an den Anschlag 64 anstößt und dadurch gekippt wird, wie in Figur 17c und d ersichtlich. Die Federkraft wirkt der Kippbewegung entgegen, so dass der Kipphebel 66 in die nicht gekippte Position gezogen wird, sobald der Kipphebel 66 nicht mehr an den Anschlag 64 gepresst wird.

Auf diese Weise kann eine Sicherheitsfunktion dadurch bereitgestellt werden, dass eine mögliche Kippbewegung des Schiebetritts 60 blockiert wird, wenn der Kipphebel 66 nicht gekippt wird. Eine solche Sicherheitsfunktion kann beispielsweise im Betrieb als eine Ver- und Entriegelung für eine Hub- und Rampenfunktion des Schiebetritts 60 vorgesehen sein. Beispielsweise kann eine Hub- und Rampenfunktion des Schiebetritts 60 erst freigeschaltet werden, wenn eine Rückkante des Schiebetritts über eine Fahrzeugaußenhaut hinweg bewegt wird, so dass eine Hub- und Rampenfunktion nur außerhalb des Fahrzeugs ausgeführt wird, und nicht innerhalb eines Einschubs im Fahrzeug.

So kann beispielsweise vermieden werden, dass sich Fehlfunktionen ergeben, und der Schiebetritt beispielsweise beschädigt wird oder im Fahrzeug verklemmt.

### Bezugszeichenliste

- 1, 20, 44,55,70: Zustiegssystem
- 2, 22,46,60: Schiebetritt
- 3: Fahrzeug
- 6: erstes Liftelement (Hubschwenkarm), erster Lifter, Hebek
- 8: vertikale Nut
- 10: zweites Liftelement (Lenk- und Endanhebungswinkel), zweiter Lifter, Hebel
- 12: horizontale Nut
- 14, 34: Ausfahreinheit
- 16: Fahrzeugboden
- 18: Bahnsteig
- 21: Rahmen
- 23: Koppelgetriebe
- 24: erstes Element des Koppelgetriebes
- 26: Motor
- 28: Zahnriemen
- 30: Sicherheitsschalter
- 32: Sicherheitsaktuator
- 34: Ausfahreinheit
- 36: elektronische Steuerungsbox
- 38: Dichtungslippe
- 40,64: Anschlag
- 42: weiteres Gelenk
- 48: manuelle Arretierung
- 50: einzelner Lifter
- 51: erstes Gelenk
- 52: zweites Gelenk
- 53: drittes Gelenk
- 54: viertes Gelenk
- 56: Bauteil des Koppelgetriebes, Hebel
- 58: Bolzen
- 62: gekrümmte Nut
- 66: Kipphebel
- 68: Feder
- α, β: Totpunkt

## Patentansprüche

1. Zustiegssystem (1, 20, 44, 55, 70) für ein Fahrzeug (3) des Personenverkehrs aufweisend:
- einen Schiebetritt (2, 22, 46, 60) mit Hub- und Rampenfunktion, wobei sowohl eine ausfahrbare Vorderkante des Schiebetritts (2, 22, 46, 60) als auch eine in Fahrtrichtung hinten angeordnete Rückkante des Schiebetritts (2, 22, 46, 60) in der Höhe veränderbar sind,
- einen Ausfahrantrieb zum Ein- und Ausfahren des Schiebetritts (2, 22, 46, 60), wobei der Ausfahrantrieb einen Ausfahrmotor (26) und ein Hubgetriebe aufweist, wobei das Hubgetriebe eine Ausfahrbewegung des Ausfahrmotors (26) in eine zumindest teilweise Schwenkbewegung des Schiebetritts (2, 22, 46, 60) übersetzt, sodass die Schwenkbewegung des Schiebetritts (2, 22, 46, 60) eine Höhenveränderung der Vorderkante und/oder der Rückkante bewirkt, und
- eine Ausfahreinheit (14, 34), mit der der Schiebetritt (2, 22, 46, 60) über das Hubgetriebe beweglich gekoppelt ist,
**dadurch gekennzeichnet, dass**
das Hubgetriebe ein erstes und ein zweites Liftelement (6, 10) aufweist, das eine im Wesentlichen längliche Form aufweist, wobei das erste und das zweite Liftelement (6, 10) jeweils mit der Ausfahreinheit (14, 34) und mit dem Schiebetritt (2, 22, 46, 60) gelenkig verbunden sind und voneinander beabstandet angeordnet sind, wobei das erste Liftelement (6) an dem Schiebetritt (2, 22, 46, 60) in einem Bereich zwischen der Vorderkante und der Rückkante mit einem ersten Gelenk (51) schwenkbar an dem Schiebetritt (2, 22, 46, 60) angekoppelt ist und mit einem zweiten Gelenk (52) schwenkbar an die Ausfahreinheit (14, 34) angekoppelt ist und dass das zweite Liftelement (10) in einem Bereich der Rückkante der mit einem dritten Gelenk (53) schwenkbar an den Schiebetritt (2, 22, 46, 60) angekoppelt ist und mit einem vierten Gelenk (54) schwenkbar an die Ausfahreinheit (14, 34) angekoppelt ist, wobei das vierte Gelenk (54) zusätzlich einen translatorischen Freiheitsgrad in horizontaler Richtung aufweist wobei das vierte Gelenk (54) mit dem Ausfahrmotor (26) gekoppelt ist.

2. Zustiegssystem (1, 20, 44, 55, 70) nach Anspruch 1, **dadurch gekennzeichnet, dass** die Ausfahrbewegung des Ausfahrmotors (26) zumindest teilweise translatorisch ist.

3. Zustiegssystem (1, 20, 44, 55, 70) nach Anspruch 1 oder 2, **dadurch gekennzeichnet, dass** das Hubgetriebe einen Hebel (6, 10, 56) aufweist, der von dem Ausfahrantrieb zum Übersetzen der Ausfahrbewegung in die Schwenkbewegung des Schiebetritts (2, 22, 46, 60) bewegt wird.

4. Zustiegssystem (1, 20, 44, 55, 70) nach einem der Ansprüche 1 bis 3, **dadurch gekennzeichnet, dass** der horizontale Freiheitsgrad des vierten Gelenks (54) durch eine horizontale Nut (12) in der Ausfahreinheit (14, 34) zur Führung des vierten Gelenks (54) gebildet wird.

5. Zustiegssystem (1, 20, 44, 55, 70) nach einem der Ansprüche 1 bis 4, **dadurch gekennzeichnet, dass** das zweite Gelenk (52) einen translatorischen Freiheitsgrad in vertikaler Richtung aufweist.

6. Zustiegssystem (1, 20, 44, 55, 70) nach Anspruch 5, **dadurch gekennzeichnet, dass** der translatorische Freiheitsgrad des zweiten Gelenks (52) durch eine vertikale Nut (8) in der Ausfahreinheit (14, 34) zur Führung des zweiten Gelenks (52) gebildet wird.

7. Zustiegssystem (1, 20, 44, 55, 70) für ein Fahrzeug (3) des Personenverkehrs aufweisend:
- einen Schiebetritt (2, 22, 46, 60) mit Hub- und Rampenfunktion, wobei sowohl eine ausfahrbare Vorderkante des Schiebetritts (2, 22, 46, 60) als auch eine in Fahrtrichtung hinten angeordnete Rückkante des Schiebetritts (2, 22, 46, 60) in der Höhe veränderbar sind,
- einen Ausfahrantrieb zum Ein- und Ausfahren des Schiebetritts (2, 22, 46, 60), wobei der Ausfahrantrieb einen Ausfahrmotor (26) und ein Hubgetriebe aufweist, wobei das Hubgetriebe eine Ausfahrbewegung des Ausfahrmotors (26) in eine zumindest teilweise Schwenkbewegung des Schiebetritts (2, 22, 46, 60) übersetzt, sodass die Schwenkbewegung des Schiebetritts (2, 22, 46, 60) eine Höhenveränderung der Vorderkante und/oder der Rückkante bewirkt, und
- eine Ausfahreinheit (14, 34), mit der der Schiebetritt (2, 22, 46, 60) über das Hubgetriebe beweglich gekoppelt ist,
**dadurch gekennzeichnet, dass**
das Hubgetriebe eine schwenkbare Ankopplung der Ausfahreinheit (14, 34) und des Schiebetritts (2, 22, 46, 60) im Bereich zwischen der Vorderkante und der Rückkante aufweist, und das Hubgetriebe ein Koppelgetriebe (23) aufweist, welches die Ausfahreinheit (14, 34) und den Schiebetritt (2, 22, 46, 60), im Bereich der Rückkante beweglich verbindet.

8. Zustiegssystem (1, 20, 44, 55, 70) nach Anspruch 7, **dadurch gekennzeichnet, dass** die Ausfahrbewegung des Ausfahrmotors (26) zumindest teilweise translatorisch ist.

9. Zustiegssystem (1, 20, 44, 55, 70) nach Anspruch 7 oder 8, **dadurch gekennzeichnet, dass** das Hubgetriebe einen Hebel (6, 10, 56) aufweist, der von dem Ausfahrantrieb zum Übersetzen der Ausfahrbewegung in die Schwenkbewegung des Schiebetritts (2, 22, 46, 60) bewegt wird.

10. Zustiegssystem (1, 20, 44, 55, 70) nach einem der Ansprüche 7 bis 9, **dadurch gekennzeichnet, dass** das Koppelgetriebe eingerichtet ist, eine translatorische Bewegung der Ausfahreinheit (14, 34) in eine Hubbewegung eines Anbindungspunktes des Koppelgetriebes mit dem Schiebetritt (2, 22, 46, 60), umzusetzen.

11. Zustiegssystem (1, 20, 44, 55, 70) nach einem der vorigen Ansprüche 1 bis 10, **dadurch gekennzeichnet, dass** der Ausfahrantrieb eine elektronische Steuerung (36) aufweist.

12. Zustiegssystem (1, 20, 44, 55, 70) nach einem der vorigen Ansprüche 1 bis 11, aufweisend einen Sicherheitsschalter (30).

13. Zustiegssystem (1, 20, 44, 55, 70) nach einem der vorigen Ansprüche 1 bis 12, aufweisend eine Feststellvorrichtung für den Schiebetritt (2, 22, 46, 60).

14. Zustiegssystem (1, 20, 44, 55, 70) nach Anspruch 13, wobei die Feststellvorrichtung (48) manuell betätigbar ist.

## Claims

1. A boarding system (1, 20, 44, 55, 70) for a passenger transport vehicle (3), comprising:
- a retractable step (2, 22, 46, 60) having a lifting and ramp function, wherein both an extendable front edge of the retractable step (2, 22, 46, 60) and a rear edge of the retractable step (2, 22, 46, 60), which is arranged in the rear in the direction of travel, are height-adjustable,
- an extending drive for retracting and extending the retractable step (2, 22, 46, 60), wherein the extending drive has an extending motor (26) and a lifting gear, wherein the lifting gear translates an extending movement of the extending motor (26) into an at least partial pivoting movement of the retractable step (2, 22, 46, 60), so that the pivoting movement of the retractable step (2, 22, 46, 60) causes a change of height of the front edge and/or of the rear edge, and
- an extending unit (14, 34), with which the retractable step (2, 22, 46, 60) is movably coupled via the lifting gear,
**characterized in that**
the lifting gear has a first and a second lifting element (6, 10), which have a substantially elongated shape, wherein the first and the second lifting element (6, 10) are in each case connected in an articulated manner to the extending unit (14, 34) and to the retractable step (2, 22, 46, 60) and spaced apart from each other, wherein the first lifting element (6), at the retractable step (2, 22, 46, 60), is pivotably coupled to the retractable step (2, 22, 46, 60) in a region between the front edge and the rear edge by means of a first joint (51), and is pivotably coupled to the extending unit (14, 34) by means of a second joint (52), and that the second lifting element (10) is pivotably coupled to the retractable step (2, 22, 46, 60) in a region of the rear edge by means of a third joint (53) and is pivotably coupled to the extending unit (14, 34) by means of a fourth joint (54), wherein the fourth joint (54) additionally has a translational degree of freedom in the horizontal direction, wherein the fourth joint (54) is coupled with the extending motor (26).

2. The boarding system (1, 20, 44, 55, 70) according to claim 1, **characterized in that** the extending movement of the extending motor (26) is at least partially translational.

3. The boarding system (1, 20, 44, 55, 70) according to claim 1 or 2, **characterized in that** the lifting gear has a lever (6, 10, 56), which is moved by the extending drive for translating the extending movement into the pivoting movement of the retractable step (2, 22, 46, 60).

4. The boarding system (1, 20, 44, 55, 70) according to any one of the claims 1 to 3, **characterized in that** the horizontal degree of freedom of the fourth joint (54) is formed by a horizontal groove (12) in the extending unit (14, 34) for guiding the fourth joint (54).

5. The boarding system (1, 20, 44, 55, 70) according to any one of the claims 1 to 4, **characterized in that** the second joint (52) has a translational degree of freedom in the vertical direction.

6. The boarding system (1, 20, 44, 55, 70) according to claim 5, **characterized in that** the translational degree of freedom of the second joint (52) is formed by a vertical groove (8) in the extending unit (14, 34) for guiding the fourth joint (52).

7. A boarding system (1, 20, 44, 55, 70) for a passenger transport vehicle (3), comprising:
- a retractable step (2, 22, 46, 60) having a lifting and ramp function, wherein both an extendable front edge of the retractable step (2, 22, 46, 60) and a rear edge of the retractable step (2, 22, 46, 60), which is arranged in the rear in the direction of travel, are height-adjustable,
- an extending drive for retracting and extending the retractable step (2, 22, 46, 60), wherein the extending drive has an extending motor (26) and a lifting gear, wherein the lifting gear translates an extending movement of the extending motor (26) into an at least partial pivoting movement of the retractable step (2, 22, 46, 60), so that the pivoting movement of the retractable step (2, 22, 46, 60) causes a change of height of the front edge and/or of the rear edge, and
- an extending unit (14, 34), with which the retractable step (2, 22, 46, 60) is movably coupled via the lifting gear,
**characterized in that**
the lifting gear has a pivotable coupling of the extending unit (14, 34) and of the retractable step (2, 22, 46, 60) in the region between the front edge and the rear edge, and the lifting gear has a coupling gear (23), which movably connects the extending unit (14, 34) and the retractable step (2, 22, 46, 60), in the region of the rear edge.

8. The boarding system (1, 20, 44, 55, 70) according to claim 7, **characterized in that** the extending movement of the extending motor (26) is at least partially translational.

9. The boarding system (1, 20, 44, 55, 70) according to claim 7 or 8, **characterized in that** the lifting gear has a lever (6, 10, 56), which is moved by the extending drive for translating the extending movement into the pivoting movement of the retractable step (2, 22, 46, 60).

10. The boarding system (1, 20, 44, 55, 70) according to any one of the claims 7 to 9, **characterized in that** the coupling gear is configured for converting a translational movement of the extending unit (14, 34) into a lifting movement of a connecting point of the coupling gear with the retractable step (2, 22, 46, 60).

11. The boarding system (1, 20, 44, 55, 70) according to any one of the preceding claims 1 to 10, **characterized in that** the extending drive has an electronic control unit (36).

12. The boarding system (1, 20, 44, 55, 70) according to any one of the preceding claims 1 to 11, comprising a safety switch (30).

13. The boarding system (1, 20, 44, 55, 70) according to any one of the preceding claims 1 to 12, comprising a locking device for the retractable step (2, 22, 46, 60).

14. The boarding system (1, 20, 44, 55, 70) according to claim 13, wherein the locking device (48) is manually operable.

## Revendications

1. Système de montée (1, 20, 44, 55, 70) pour un véhicule (3) du transport de passagers, comprenant:
- un marchepied coulissant (2, 22, 46, 60) à fonction de levage et de rampe, dans lequel aussi bien un bord avant déployable du marchepied coulissant (2, 22, 46, 60) qu'un bord arrière du marchepied coulissant (2, 22, 46, 60), qui est disposé à l'arrière dans le sens de marche, peuvent être modifiés en hauteur,
- un mécanisme d'entraînement de déploiement destiné à faire rentrer et sortir le marchepied coulissant (2, 22, 46, 60), dans lequel ledit mécanisme d'entraînement de déploiement comprend un moteur de déploiement (26) et un engrenage de levage, dans lequel ledit engrenage de levage transforme un mouvement de déploiement du moteur de déploiement (26) en un mouvement de pivotement au moins partiel du marchepied coulissant (2, 22, 46, 60) de sorte que le mouvement de pivotement du marchepied coulissant (2, 22, 46, 60) provoque un changement de hauteur du bord avant et/ou du bord arrière, et
- une unité de déploiement (14, 34) par l'intermédiaire de laquelle le marchepied coulissant (2, 22, 46, 60) est couplée de manière mobile via ledit engrenage de levage,
**caractérisé par le fait que**
l'engrenage de levage présente des premier et deuxième éléments de levage (6, 10) ayant une forme pour l'essentiel allongée, les premier et deuxième éléments de levage (6, 10) étant reliés chacun de façon articulée à l'unité de déploiement (14, 34) et au marchepied coulissant (2, 22, 46, 60) et sont espacés l'un de l'autre, dans lequel ledit premier élément de levage (6) est couplé à pivotement, par une première articulation (51), au marchepied coulissant (2, 22, 46, 60), dans une zone située entre le bord avant et le bord arrière et est couplé à pivotement, par une deuxième articulation (52), à ladite unité de déploiement (14, 34), et que le deuxième élément de levage (10) est couplé à pivotement, par une troisième articulation (53), au marchepied coulissant (2, 22, 46, 60), dans une zone du bord arrière, et est couplé à pivotement, par une quatrième articulation (54), à l'unité de déploiement (14, 34), la quatrième articulation (54) présentant en outre un degré de liberté en translation dans la direction horizontale, ladite quatrième articulation (54) étant couplée au moteur de déploiement (26).

2. Système de montée (1, 20, 44, 55, 70) selon la revendication 1, **caractérisé par le fait que** le mouvement de déploiement du moteur de déploiement (26) est un mouvement au moins en partie de translation.

3. Système de montée (1, 20, 44, 55, 70) selon la revendication 1 ou 2, **caractérisé par le fait que** ledit engrenage de levage comprend un levier (6, 10, 56) qui est déplacé par le mécanisme d'entraînement de déploiement pour transformer le mouvement de déploiement dans le mouvement de pivotement du marchepied coulissant (2, 22, 46, 60).

4. Système de montée (1, 20, 44, 55, 70) selon l'une quelconque des revendications 1 à 3, **caractérisé par le fait que** le degré de liberté horizontal de la quatrième articulation (54) est formé par une rainure horizontale (12) dans l'unité de déploiement (14, 34) pour guider la quatrième articulation (54).

5. Système de montée (1, 20, 44, 55, 70) selon l'une quelconque des revendications 1 à 4, **caractérisé par le fait que** la deuxième articulation (52) présente un degré de liberté en translation dans la direction verticale.

6. Système de montée (1, 20, 44, 55, 70) selon la revendication 5, **caractérisé par le fait que** le degré de liberté en translation de la deuxième articulation (52) est formé par une rainure verticale (8) dans l'unité de déploiement (14, 34) pour guider la deuxième articulation (52).

7. Système de montée (1, 20, 44, 55, 70) pour un véhicule (3) du transport de passagers, comprenant:
- un marchepied coulissant (2, 22, 46, 60) à fonction de levage et de rampe, dans lequel aussi bien un bord avant déployable du marchepied coulissant (2, 22, 46, 60) qu'un bord arrière du marchepied coulissant (2, 22, 46, 60), qui est disposé à l'arrière dans le sens de marche, peuvent être modifiés en hauteur,
- un mécanisme d'entraînement de déploiement destiné à faire rentrer et sortir le marchepied coulissant (2, 22, 46, 60), dans lequel ledit mécanisme d'entraînement de déploiement comprend un moteur de déploiement (26) et un engrenage de levage, dans lequel ledit engrenage de levage transforme un mouvement de déploiement du moteur de déploiement (26) en un mouvement de pivotement au moins partiel du marchepied coulissant (2, 22, 46, 60) de sorte que le mouvement de pivotement du marchepied coulissant (2, 22, 46, 60) provoque un changement de hauteur du bord avant et/ou du bord arrière, et
- une unité de déploiement (14, 34) par l'intermédiaire de laquelle le marchepied coulissant (2, 22, 46, 60) est couplée de manière mobile via ledit engrenage de levage,
**caractérisé par le fait que**
l'engrenage de levage présente un couplage pivotant de l'unité de déploiment (14, 34) et du marchepied coulissant (2, 22, 46, 60) dans la zone située entre le bord avant et le bord arrière, et que l'engrenage de levage présente un engrenage de couplage (23) qui relie de manière mobile, au niveau du bord arrière, l'unité de déploiement (14, 34) et le marchepied coulissant (2, 22, 46, 60).

8. Système de montée (1, 20, 44, 55, 70) selon la revendication 7, **caractérisé par le fait que** le mouvement de déploiement du moteur de déploiement (26) est un mouvement au moins en partie de translation.

9. Système de montée (1, 20, 44, 55, 70) selon la revendication 7 ou 8, **caractérisé par le fait que** ledit engrenage de levage comprend un levier (6, 10, 56) qui est déplacé par le mécanisme d'entraînement de déploiement pour transformer le mouvement de déploiement dans le mouvement de pivotement du marchepied coulissant (2, 22, 46, 60).

10. Système de montée (1, 20, 44, 55, 70) selon l'une quelconque des revendications 7 à 9, **caractérisé par le fait que** ledit engrenage de couplage est conçu pour transformer un mouvement de translation de l'unité de déploiement (14, 34) en un mouvement de levage d'un point d'attache de l'engrenage de couplage au marchepied coulissant (2, 22, 46, 60).

11. Système de montée (1, 20, 44, 55, 70) selon l'une quelconque des revendications précédentes 1 à 10, **caractérisé par le fait que** ledit mécanisme d'entraînement de déploiement comprend une commande électronique (36).

12. Système de montée (1, 20, 44, 55, 70) selon l'une quelconque des revendications précédentes 1 à 11, comprenant un interrupteur de sécurité (30).

13. Système de montée (1, 20, 44, 55, 70) selon l'une quelconque des revendications précédentes 1 à 12, comprenant un dispositif de verrouillage pour le marchepied coulissant (2, 22, 46, 60).

14. Système de montée (1, 20, 44, 55, 70) selon la revendication 13, dans lequel ledit dispositif de verrouillage (48) peut être actionné manuellement.
